# EUROPÄISCHE PATENTSCHRIFT

(11) **EP 1 980 509 B1**
(45) Veröffentlichungstag und Bekanntmachung des Hinweises auf die Patenterteilung: **07.09.2011**
(21) Anmeldenummer: 08010797.2
(22) Anmeldetag: 11.06.2004
(51) Int. Cl.: B65G 47/84, B67C 7/00

(54) **Behälterbehandlungsmaschinen**
Container handling machine
Machine de traitement de récipients

(30) Priorität: 30.09.2003 DE 10345317
(43) Veröffentlichungstag der Anmeldung: 15.10.2008
(62) Teilanmeldung aus: 04013809.1
(73) Patentinhaber: KHS GmbH, 44143 Dortmund (DE)
(72) Erfinder: Till, Volker, 65719 Hofheim/Taunus (DE)

(56) Entgegenhaltungen:
- DE-C- 357 927
- GB-A- 809 592
- US-A- 1 604 440

## Beschreibung

Die Erfindung betrifft eine Behälterbehandlungsmaschine mit einem Überleitarm gemäß dem Oberbegriff des Anspruchs 1 und wie aus der GB 809 592 A bekannt.

Behälterbehandlungsmaschinen sind z. B. Füllmaschinen, Verschließmaschinen, Rinser und dergleichen. Bei höherer Leistung werden sie in rotierender Bauart ausgebildet, wobei die die Behälter aufnehmenden Behandlungsplätze am Umfang eines so genannten Kreisels angeordnet sind und umlaufend die Behälter während der Behandlung mitnehmen.

Mit einem Halsring versehene Kunststoffbehälter werden dann, wenn sie leer sind oder sich innerhalb der Behandlungsmaschinen befinden, in der Regel durch so genanntes Neckhandling gehandhabt und/oder transportiert.

Die Zuführung der Behälter zu den Behandlungsmaschinen erfolgt i.d.R. durch bekannte Vorrichtungen zum Lufttransport derartiger Behälter. Innerhalb der Behandlungsmaschinen erfolgt der Transport anhand von Übergabe- oder Transportsternen, welche speziell für die Handhabung von mit einem Halsring versehenen Behältern ausgebildet sind.

Die Übergabe der Behälter vom Lufttransport, in welchem die Behälter ungeordnet und ohne feste Teilung transportiert werden, zu den Übergabe- oder Transportsternen, welche die Behälter geordnet und mit fester Teilung transportieren, erfolgt unter der Verwendung von bekannten Einlauf- oder Teilungsschnecken, welche die auf Stoß stehenden, durch den Lufttransport angeförderten Behälter vereinzeln, auf Teilung bringen und anschließend einem Übergabe- oder Transportstern zuführen.

Den nächsten Schritt stellt die Überführung der Behälter von einem Übergabestern zum Kreisel einer Behandlungsmaschine dar.

Die zur Lösung dieser Aufgabe erforderlichen konstruktiven Ausgestaltungen werden in starkem Maße durch die Art der Arretierung der Behälter während des Umlaufs mit dem Kreisel der Behandlungsmaschine bestimmt.

Werden die Behälter z.B. durch Greifer, welche an die Mündungsbereiche dieser Behälter bzw. an die Halsringe angreifen arretiert, so weisen i. d. R. auch die Übergabe-oder Einlaufsterne entsprechende Greifer auf, wobei die Übergabe der Behälter vom Einlaufstern zum Kreisel im Wesentlichen im scheinbaren Berührungspunkt beider Teilkreise erfolgt. Dabei sind die Freigabe durch den Einlaufstern und die Arretierung durch den Kreisel zeitlich und räumlich so aufeinander abgestimmt, dass das die Übergabe sicher, schnell und fehlerfrei erfolgt.

Werden die Behälter durch Greifer, welche am Körper der Behälter angreifen arretiert, so weisen die Einlaufsterne üblicher Weise keine Greiferelemente sondern so genannte Sterntaschen auf, welche die Behälter unter Mitwirkung von Außenführungen zunächst sicher führen und anschließend an die Greifer übergeben.

Nachteilig an den oben vorgestellten Vorrichtungen ist zunächst die große Anzahl der erforderlichen Bauteile und die mit diesen verbundenen hohen Herstell- und Wartungskosten.

Insbesondere bei der, immer größere Marktanteile gewinnenden, kaltaseptischen Abfüllung ergibt sich für derartige Vorrichtungen ein weiterer wesentlicher Nachteil, welcher darin besteht, dass ein großer Aufwand betrieben werden muss um derartige Vorrichtungen im laufenden Betrieb steril zu halten.

Zur Lösung u.a. dieses Problems sind von der Anmelderin weitere Schutzrechtsanmeldungen, z.B. Aktenzeichen 103 40 365.5 (oder EP 1 512 663 A) und Aktenzeichen 103 26 618.6 (oder EP 1 486 454 A), vorgelegt worden, welche sich in erster Linie mit kaltaseptischen Behälterbehandlungsmaschinen und dabei insbesondere mit der Reduzierung der Anzahl der Bauteile und der Verkleinerung des erforderlichen Reinraumes befassen.

Aufgabe und Ziel der vorliegenden Erfindung ist es, für den Übergang von Behältern von einem Übergabestern zum Kreisel einer Behälterbehandlungsmaschine, insbesondere, aber nicht ausschließlich für Behälterbehandlungsmaschinen entsprechend der o.g. Anmeldungen, eine Überleitvorrichtung aufzuzeigen, welche die oben dargestellten Nachteile sicher vermeidet. Dazu sieht die vorliegende Erfindung eine Behälterbehandlungsmaschine gemäß Anspruch 1 vor.

Eine derartige Behälterbehandlungsmaschine, wie Füller, Rinser oder Verschließer, für die Behandlung von Behältern (6), die jeweils mit einem eine Behältermündung aufweisenden und zwischen Halsring und Gewinde des Behälters liegenden Mündungsansatz (12) und mit einem an den Mündungsansatz (12) anschließenden Halsring (13) ausgebildet sind, mit einem um eine Maschinenachse umlaufend antreibbaren Kreisel (2) mit Aufnahmen (7) für die Behälter (6), mit einem ebenfalls Aufnahmen (9) für die Behälter (6) bildenden Einlaufstern (3) zum Zuführen der Behälter (6) an den Kreisel (2) ausgestattet. Dies weise weiterhin einen mit dem Mündungsansatz (12) und/oder dem Halsring (13) zusammenwirkenden Überleitarm (10) zum Überleiten der Behälter (6) aus den Aufnahmen (9) des Einlaufsternes (3) in die Aufnahmen (7) des Kreisels (2) auf, wobei Mittel vorgesehen sind, die eine gesteuerte Schwenkbewegung des Überleitarmes (10) ermöglichen und/oder durchführen.

Dabei sind insbesondere die Aufnahmen (7) am Kreisel (2) sowie die Aufnahmen (9) am Einlaufstern (3) jeweils für eine hängende Halterung der Behälter (6) an ihrem Halsring (13) ausgebildet, und der Überleitarm (10) ist an die Außenkontur der Behälter (6) an ihren Mündungsansätzen (12) und/oder Halsringen (13) so angepasst, dass der Überleitarm (10) beim Überleiten gegen den Mündungsansatz (12) oberhalb des Halsrings (13) oder gegen den Halsring (13) oder gegen den Mündungsansatz (12) und den Halsring (13) anliegt.

Idealerweise sind Mittel zur Einstellung von Größe und/oder Lage der Schwenkbewegung des Überleitarmes (10) vorgesehen. Dabei sind die Aufnahmen (7) am Kreisel (2) sowie die Aufnahmen (9) am Einlaufstern (3) jeweils für eine hängende Halterung der Behälter (6) an ihrem Halsring (13) ausgebildet. Weiterhin wird vorteilhafterweise der Überleitarm (10) an die Außenkontur der Behälter (6) an ihren Mündungsansätzen (12) und/oder Halsringen (13) so angepasst, dass der Überleitarm (10) beim Überleiten gegen den Mündungsansatz (12) oberhalb des Halsrings (13) oder gegen den Halsring (13) oder gegen den Mündungsansatz (12) und den Halsring (13) anliegt.

Die Behälterbehandlungsmaschine kann verbessert werden, indem der Überleitarm (10) an die von dem Mündungsansatz (12) und dem Halsring (13) gebildete Kontur der Behälter (6) angepasst ist und/oder zumindest teilweise mit reibungs- und/oder verschließmindernden Mitteln beschichtet ist.

Im Nachfolgenden wird die Erfindung an Hand von in der Zeichnung dargestellten Ausführungsbeispielen näher erläutert.

Im Einzelnen zeigt die:

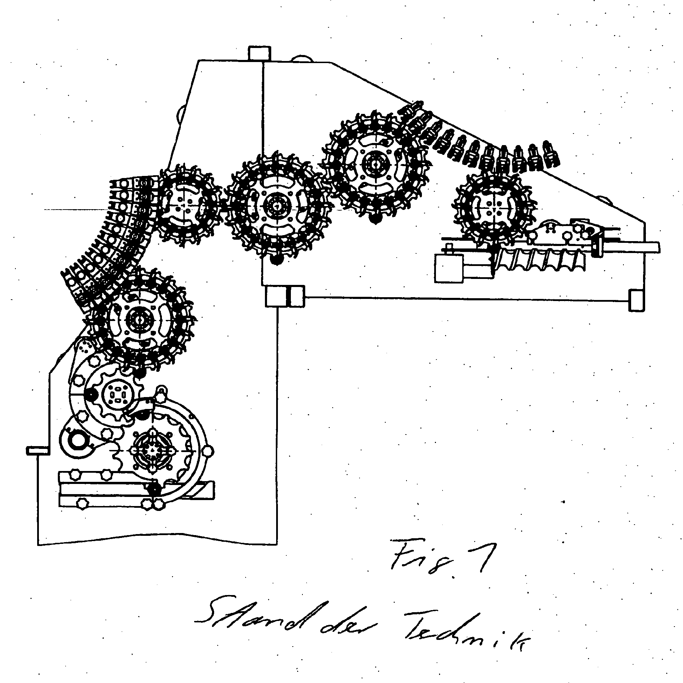

Figur 1: in einer stark vereinfachten Übersichtszeichnung zwei Behälterbehandlungsmaschinen, welche durch Einlauf-, Auslauf- und Transportsterne miteinander verkettet sind, wobei alle dargestellten Elemente zum Stand der Technik gehören, die
Figur 2: in einer vereinfachten Draufsicht eine Überleitvorrichtung in eingebautem Zustand, die
Figur 3: eine weitere Ausgestaltungsvariante mit einem an die Kontur von Halsring 13 und Mündungsansatz 12 angepassten Überleitarm 10 und die
Figur 4: eine weitere, vereinfachte Variante des Überleitarmes 10.

Weiterbildungen, Vorteile und Anwendungsmöglichkeiten der Erfindung ergeben sich aus der nachfolgenden Beschreibung von Ausführungsbeispielen und der Zeichnung.

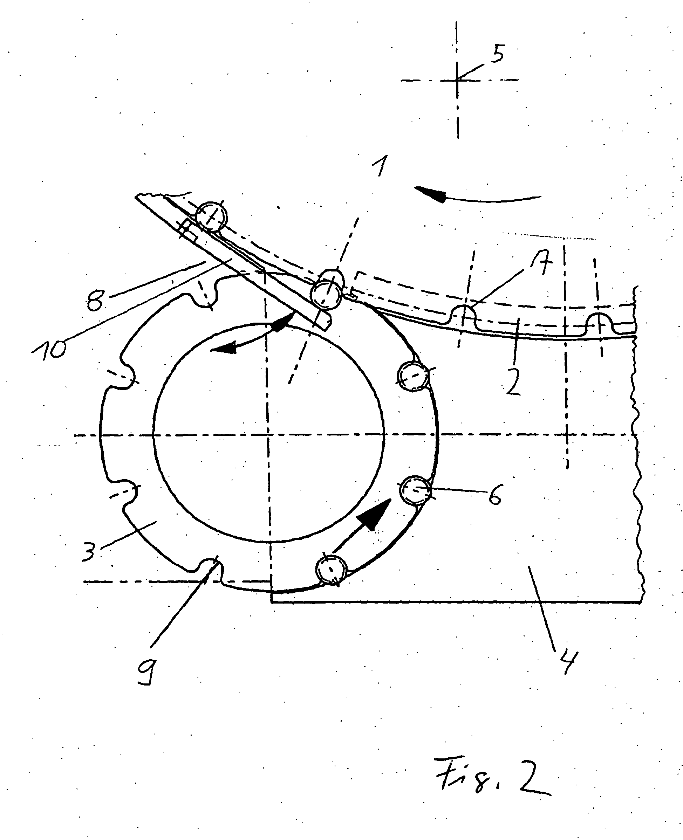

Die Figur 2 zeigt zunächst ein Kreissegment des Kreisels 2 einer Behälterbehandlungsmaschine 1, wobei es sich z.B. auch um einen Rinser oder aber auch um einen Verschließer handeln kann. Im dargestellten Ausführungsbeispiel handelt es sich um eine Füllmaschine umlaufender Bauart. Der umlaufende Teil der Füllmaschine, der so genannte Kreisel 2, ist um die Maschinendrehachse 5 drehbar ausgeführt.

Durch den Einlaufstern 3, welcher mit so genannten Sterntaschen 9 ausgestattet ist, werden die Behälter 6 der Behälterbehandlungsmaschine 1 zugeführt, wobei eine Außenführung 4 die Führung der Behälter 6 zumindest für einen bestimmten Streckenabschnitt unterstützt.

Zur Aufnahme der Behälter 6 in der Gefäßbehandlungsmaschine 1 sind am Kreisel 2 Aufnahmetaschen 7 vorgesehen, in welche die Behälter 6 unter Mitwirkung der Überleitvorrichtung 8 eingeschoben werden.

Das Einschieben geschieht zunächst dadurch, dass die Behälter 6 von dem kontinuierlich drehenden Einlaufstern 3 gegen die Überleitvorrichtung 8 gedrückt werden. Falls die Überleitvorrichtung 8 feststehend und unbeweglich ausgebildet ist, wird der Behälter 6 mit fortschreitender Drehung von Kreisel 2 und Einlaufstern 3 aus der Sterntasche 9 heraus- und in die korrespondierende Aufnahmetasche 7 des Kreisels 2 hineingeschoben.

Die Überleitvorrichtung 8 besteht im Wesentlichen aus dem Überleitarm 10, welcher mittels einer nicht dargestellten Befestigungsvorrichtung ortsfest, also nicht mit dem Kreisel 2 umlaufend, an der Behälterbehandlungsmaschine bzw. ihren oder anderen ortsfesten Komponenten befestigt ist.

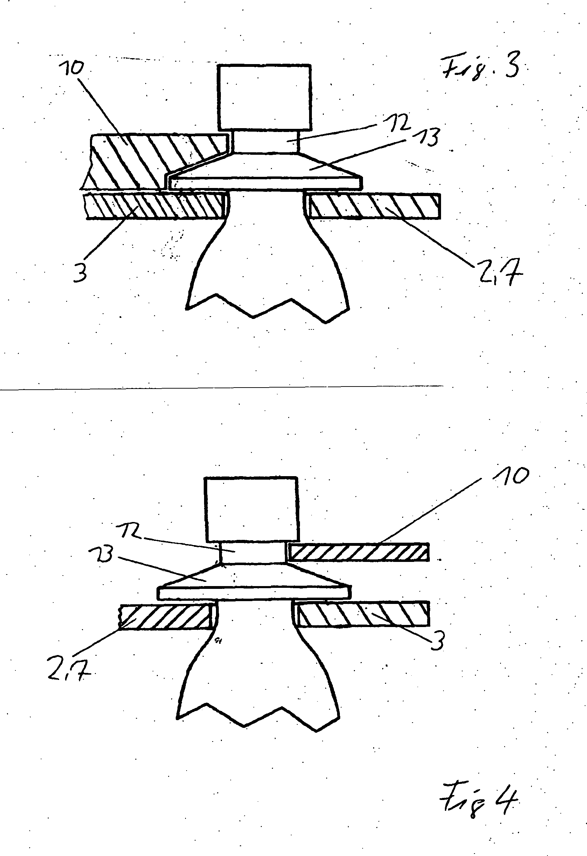

Für die Gestaltung des Überleitarmes 10 bestehen im Wesentlichen drei Möglichkeiten. Zunächst kann dieser in seinen geometrischen Abmessungen ausschließlich an die Gestalt des zwischen Halsring 13 und Gewinde des Behälters liegenden Mündungsansatzes 12 angepasst werden, wodurch sich besonders einfache Möglichkeiten zur Herstellung des Überleitarmes 10 ergeben. Dieser kann in diesem Fall z.B. auf einfache und preiswerte Art und Weise aus Blech, Kunststoff oder einem anderen geeigneten Werkstoff hergestellt werden. Beispielhaft ist eine solche Ausgestaltung in der Figur 4 dargestellt.

Ebenfalls kann der Überleitarm 10 ausschließlich an die Kontur bzw. den Durchmesser des Halsringes 13 angepasst sein.

Als Verbesserung der oben dargestellten Ausgestaltungsvariante besteht zusätzlich die Möglichkeit, wie in der Figur 3 dargestellt, den Überleitarm 10 komplett an die von Halsring 13 und Mündungsansatz 12 gemeinsam gebildete Kontur anzupassen. Durch diese Vorgehensweise wird eine verbesserte Führung und Überleitung des Behälters zwischen Einlaufstern 3 und Kreisel 2 bzw. Aufnahmetaschen 7 erreicht.

Bei dieser Variante bietet es sich an, den Überleitarm 10 nicht aus einem Blechwerkstoff, sondern aus einem geeignetem, aus Metall oder einem anderen Werkstoff bestehenden Vollmaterial zu fertigen.

Da die von Halsring 13 und/oder Mündungsansatz 12 gebildete Kontur, aber auch schon die Kontur bzw. der Durchmesser des Mündungsansatzes 12 von Behältertyp zu Behältertyp abweichen kann, ist es von besonderem Vorteil, zumindest den Überleitarm 10 leicht austauschbar auszuführen.

Ebenfalls ist es von Vorteil, die Flächen und/oder Kanten des Überleitarmes 10 welche mit denen sich bewegenden Behältern 6 in Berührung kommen, reibungsmindernd und/oder verschleißreduzierend zu beschichten. Dazu bietet sich z.B. eine Hartverchromung oder eine Beschichtung mit Wolframkarbid an.

Abweichend von der in der Figur 2 dargestellten, im Wesentlichen halbkreisförmigen Ausbildung von Sterntaschen 9 und Aufnahmetaschen 7 kann, zur Verbesserung des Bewegungsablaufes und zur Vereinfachung des Überganges der Behälter 6 auch eine andere, vorteilhaftere Kontur der Taschen vorgesehen sein.

Nach dem Überleiten der Behälter 6 in den Kreisel 2 unterstützt eine ortsfeste, den Kreisel 2 zumindest teilweise umschließende Außenführung 11 die Führung der Behälter 6, wobei die Außenführung 11 gleichzeitig einen Teil des unteren Abschlusses eines Reinraumes bilden kann.

Zur Anpassung der hier vorgestellten Überleitvorrichtung 8 an unterschiedliche Behälterhals- bzw. Behälterhalsringdurchmesser ist vorgesehen, die Überleitvorrichtung 8 bzw. den Überleitarm 10 verstellbar auszuführen.

In einer weiteren, erfindungsgemäßen Ausgestaltung der vorliegenden Erfindung ist vorgesehen, dass die Überleitvorrichtung 8, bzw. der Überleitarm 10 den Überleitvorgang durch aktive Bewegungen zusätzlich unterstützt und somit optimiert und zusätzlich beschleunigt, wodurch höhere Anlagenleistungen möglich sind.

Zur Realisierung dieser Funktion wird zumindest der Überleitarm 10 schwenkbar ausgeführt, wodurch dieser jeden Behälter durch eine aktive Bewegung von der Sterntasche 9 in die Aufnahmetaschen 7 überführt.

Als Antrieb für diese Schwenkbewegung können alle in der Technik bekannten und für diesen Anwendungsfall geeigneten Antriebsarten verwendet werden. Beispielhaft seien hier folgende Antriebsarten genannt: Pneumatikzylinder, Hydraulikzylinder, Dreh- und/oder Schwenkantriebe mit elektrischem oder hydraulischem oder pneumatischem Antrieb, (E-lektro)magnete mit anziehender und/oder abstoßender Kraftwirkung, auf dem Einlaufstern befindliche Steuernocken oder -kurven, Zug- und/oder Druckfedern auch in Verbindung mit Steuernocken oder -kurven.

Auf die Darstellung der konstruktiven Ausführung eines Antriebes für die Schwenkbewegung wurde verzichtet.

In einer weiteren erfindungsgemäßen Ausbildung der vorliegenden Erfindung ist vorgesehen, die Lage und/oder die Größe der Schwenkbewegung des Überleitarmes 10 einstellbar auszuführen, um die Überleitvorrichtung 8 an unterschiedliche Behälterabmessungen anpassen zu können. Auf eine Darstellung der dazu erforderlichen konstruktiven Maßnahmen wurde ebenfalls verzichtet.

## Patentansprüche

1. Behälterbehandlungsmaschine, wie Füller, Rinser oder Verschließer, für die Behandlung von Behältern (6), die jeweils mit einem eine Behältermündung aufweisenden und zwischen Halsring und Gewinde des Behälters liegenden Mündungsansatz (12) und mit einem an den Mündungsansatz (12) anschließenden Halsring (13) ausgebildet sind, mit einem um eine Maschinenachse umlaufend antreibbaren Kreisel (2) mit Aufnahmen (7) für die Behälter (6), mit einem ebenfalls Aufnahmen (9) für die Behälter (6) bildenden Einlaufstern (3) zum Zuführen der Behälter (6) an den Kreisel (2), sowie mit einem mit dem Mündungsansatz (12) und/oder dem Halsring (13) zusammenwirkenden Überleitarm (10) zum Überleiten der Behälter (6) aus den Aufnahmen (9) des Einlaufsternes (3) in die Aufnahmen (7) des Kreisels (2),
**dadurch gekennzeichnet, dass**
Mittel vorgesehen sind, die eine gesteuerte Schwenkbewegung des Überleitarmes (10) ermöglichen und/oder durchführen.

2. Behälterbehandlungsmaschine nach Anspruch 2, **gekennzeichnet dadurch, dass** die Aufnahmen (7) am Kreisel (2) sowie die Aufnahmen (9) am Einlaufstern (3) jeweils für eine hängende Halterung der Behälter (6) an ihrem Halsring (13) ausgebildet sind, und dass der Überleitarm (10) an die Außenkontur der Behälter (6) an ihren Mündungsansätzen (12) und/oder Halsringen (13) so angepasst ist, dass der Überleitarm (10) beim Überleiten gegen den Mündungsansatz (12) oberhalb des Halsrings (13) oder gegen den Halsring (13) oder gegen den Mündungsansatz (12) und den Halsring (13) anliegt.

3. Behälterbehandlungsmaschine nach Anspruch 1 oder 2, **dadurch gekennzeichnet**, durch Mittel zur Einstellung von Größe und/oder Lage der Schwenkbewegung des Überleitarmes (10).

4. Behälterbehandlungsmaschine nach einem der Ansprüche 1 bis 3, **dadurch gekennzeichnet, dass** die Aufnahmen (7) am Kreisel (2) sowie die Aufnahmen (9) am Einlaufstern (3) jeweils für eine hängende Halterung der Behälter (6) an ihrem Halsring (13) ausgebildet sind.

5. Behälterbehandlungsmaschine nach einem der vorstehenden Ansprüche, **dadurch gekennzeichnet, dass** der Überleitarm (10) an die Außenkontur der Behälter (6) an ihren Mündungsansätzen (12) und/oder Halsringen (13) so angepasst ist, dass der Überleitarm (10) beim Überleiten gegen den Mündungsansatz (12) oberhalb des Halsrings (13) oder gegen den Halsring (13) oder gegen den Mündungsansatz (12) und den Halsring (13) anliegt.

6. Behälterbehandlungsmaschine nach einem der vorhergehenden Ansprüche, **dadurch gekennzeichnet, dass** der Überleitarm (10) an die von dem Mündungsansatz (12) und dem Halsring (13) gebildete Kontur der Behälter (6) angepasst ist.

7. Behandlungsvorrichtung nach einem der vorhergehenden Ansprüche, **dadurch gekennzeichnet, dass** der Überleitarm (10) zumindest teilweise mit reibungsmindernden Mittel beschichtet ist.

8. Behandlungsvorrichtung nach einem der vorhergehenden Ansprüche, **dadurch gekennzeichnet, dass** der Überleitarm (10) zumindest teilweise mit verschleißmindernden Mitteln beschichtet ist.

## Claims

1. Container handling machine, such as a filler, rinser or capper, for handling containers (6) which are each formed with a mouth extension (12) comprising a container mouth and located between the neck ring and the thread of the container, and with a neck ring (13) which adjoins the mouth extension (12), said machine comprising a turntable (2) which can be driven in rotation about a machine axis and which has holding recesses (7) for the containers (6), an introduction wheel (3) which likewise forms holding recesses (9) for the containers (6) and which serves to supply the containers (6) to the turntable (2), and a transfer arm (10) which cooperates with the mouth extension (12) and/or the neck ring (13) and which serves to transfer the containers (6) from the holding recesses (9) of the introduction wheel (3) to the holding recesses (7) of the turntable (2), **characterised in that** means are provided which allow and/or carry out a controlled pivoting movement of the transfer arm (10).

2. Container handling machine according to claim 1, **characterised in that** the holding recesses (7) on the turntable (2) and the holding recesses (9) on the introduction wheel (3) are each designed to hold the containers (6) in a suspended manner at their neck ring (13), and **in that** the transfer arm (10) is adapted to the outer contour of the containers (6) at the mouth extensions (12) and/or neck rings (13) thereof in such a way that the transfer arm (10), during the transfer operation, bears against the mouth extension (12) above the neck ring (13) or against the neck ring (13) or against the mouth extension (12) and the neck ring (13).

3. Container handling machine according to claim 1 or 2, **characterised by** means for adjusting the magnitude and/or position of the pivoting movement of the transfer arm (10).

4. Container handling machine according to one of claims 1 to 3, **characterised in that** the holding recesses (7) on the turntable (2) and the holding recesses (9) on the Introduction wheel (3) are each designed to hold the containers (6) In a suspended manner at their neck ring (13).

5. Container handling machine according to one of the preceding claims, **characterised in that** the transfer arm (10) Is adapted to the outer contour of the containers (6) at the mouth extensions (12) and/or neck rings (13) thereof in such a way that the transfer arm (10), during the transfer operation, bears against the mouth extension (12) above the neck ring (13) or against the neck ring (13) or against the mouth extension (12) and the neck ring (13).

6. Container handling machine according to one of the preceding claims, **characterised in that** the transfer arm (10) is adapted to the contour of the containers (6) formed by the mouth extension (12) and the neck ring (13).

7. Container handling machine according to one of the preceding claims, **characterised in that** the transfer arm (10) is coated at least partially with friction-reducing agents.

8. Container handling machine according to one of the preceding claims, **characterised in that** the transfer arm (10) is coated at least partially with wear-reducing agents.

## Revendications

1. Machine de traitement de récipients, telle qu'une remplisseuse, une rinceuse ou une encapsuleuse, pour le traitement de récipients (6), qui sont réalisés chacun avec un rebord (12), muni de la bouche du récipient et situé entre la bague et le filetage du récipient, et avec une bague (13) adjacente au rebord (12), comportant un carrousel (2) pouvant être actionné en rotation autour d'un axe de la machine et muni de logements (7) pour les récipients (6), comportant un tourniquet d'admission (3) formant également des logements (9) pour les récipients (6) et destiné à acheminer les récipients (6) vers le carrousel (2), et comportant un bras de transfert (10), coopérant avec le rebord (12) et/ou la bague (13) et destiné à transférer les récipients (6) hors des logements (9) du tourniquet d'admission (3) dans les logements (7) du carrousel (2), **caractérisée en ce qu'**il est prévu des moyens qui permettent et/ou mettent en oeuvre un mouvement de pivotement commandé du bras de transfert (10).

2. Machine de traitement de récipients selon la revendication 1, **caractérisée en ce que** les logements (7) sur le carrousel (2), ainsi que les logements (9) sur le tourniquet d'admission (3) sont configurés respectivement pour la fixation par suspension des récipients (6) au niveau de leur bague (13), et **en ce que** le bras de transfert (10) est ajusté au contour extérieur des récipients (6) au niveau de leur rebord (12) et/ou de leur bague (13), de telle sorte que le bras de transfert (10) au moment du transfert est en appui contre le rebord (12) au-dessus de la bague (13) ou contre la bague (13) ou contre le rebord (12) et la bague (13).

3. Machine de traitement de récipients selon la revendication 1 ou 2, **caractérisée par** des moyens destinés à régler l'ampleur et/ou la position du mouvement de pivotement du bras de transfert (10).

4. Machine de traitement de récipients selon l'une quelconque des revendications 1 à 3, **caractérisée en ce que** les logements (7) sur le carrousel (2), ainsi que les logements (8) sur le tourniquet d'admission (3) sont configurés respectivement pour une fixation par suspension des récipients (6) au niveau de leur bague (13).

5. Machine de traitement de récipients selon l'une quelconque des revendications précédentes, **caractérisée en ce que** le bras de transfert (10) est ajusté au contour extérieur des récipients (6) au niveau de leur rebord (12) et/ou de leur bague (13), de telle sorte que le bras de transfert (10) au moment du transfert est en appui contre le rebord (12) au-dessus de la bague (13) ou contre la bague (13) ou contre le rebord (12) et la bague (13).

6. Machine de traitement de récipients selon l'une quelconque des revendications précédentes, **caractérisée en ce que** le bras de transfert (10) est ajusté au contour, formé par le rebord (12) et la bague (13), des récipients (6).

7. Machine de traitement de récipients selon l'une quelconque des revendications précédentes, **caractérisée en ce que** le bras de transfert (10) est revêtu au moins partiellement avec des agents réduisant le frottement.

8. Machine de traitement de récipients selon l'une quelconque des revendications précédentes, **caractérisée en ce que** le bras de transfert (10) est revêtu au moins partiellement avec des agents réduisant l'usure.
